# EUROPEAN PATENT SPECIFICATION

(11) **EP 4 489 612 B1**
(45) Date of publication and mention of the grant of the patent: **06.05.2026**
(21) Application number: 23710870.9
(22) Date of filing: 09.03.2023
(51) Int. Cl.: A44B 18/00, A63H 33/04, A63H 33/06, F16B 5/07

(54) **BUILDING BLOCK**
BAUSTEIN
ÉLÉMENT DE CONSTRUCTION

(30) Priority: 09.03.2022 BE 202205161; 30.06.2022 US 202217810045
(43) Date of publication of application: 15.01.2025
(73) Proprietor: C.DEC BV, 8660 De Panne (BE)
(72) Inventor: DECOENE, Claire, 8660 De Panne (BE); PEETERS, Ivan, 9120 Sint-Niklaas (BE)
(74) Representative: Brantsandpatents bv
(86) International application number: PCT/EP2023/056079
(87) International publication number: WO 2023/170238

(56) References cited:
- US-A- 5 657 516
- US-A- 6 050 873
- US-A1- 2011 206 872

## Description

### INTRODUCTION

The present invention concerns a building block.

### STATE OF THE ART

The so-called hook and loop fasteners are the most well-known quick closures, which intend to connect two components.

The generic trademark Velcro ^{(tm)} often refers to these hook and loop fasteners because of the brand's prominence.

Hook and loop fasteners consist of two components: typically, two linear fabric strips (or, alternatively, round "dots" or squares) that are attached (sewn or otherwise sutured) to the facing surfaces to be attached. The first part is provided with small brackets; the second has smaller loops. When the two are pressed together, the hooks get stuck in the loops, and the two click elements are temporarily fastened or bound. When separated, the strips make a characteristic tearing sound by pulling the two surfaces apart or peeling them off.

Mr. George De Mestral invented the original technique of hook and loop fastener. He applied for a patent CH295638A in 1951 with Velcro SA as the applicant.

This hook and loop technique has some specific advantages and disadvantages.

The advantages are that it is quite efficient and is now a well-known technique. It is also washable, which allows to keep it hygienic for a longer time.

However, there is also a range of drawbacks to it. It is expensive to make, over time, it loses its effect, and it tends to accumulate hair, dust, and fur in the hooks after a few months of regular use. The loops can become elongated or broken after prolonged use. The hooks are often attached to garments, especially loosely woven items such as sweaters. These clothes can be damaged when one tries to remove the hook and loop fastener, even if the sides are slowly separated. It also absorbs moisture and perspiration when worn on the skin, which means it will smell if not washed.

In addition to Velcro's original hook and loop fastener, there are also some variations on the market. The Slidingly Engaging Fastener is designed to address various issues with common hook and loop fasteners. Heavy-duty variants have mushroom-shaped stems on each plane of the clasp, which give an audible click when the two planes fit together. In addition, a strong pressure-sensitive adhesive adheres each part to its substrate.

Document US 2011/206872 A1 discloses a building block according to the preamble of claim 1.

Other disclosures, such as US6050873 and US5657516 describe concepts of similar building blocks, which however do not fulfill the requirements in terms of easy removal, while ensuring strong retention.

### SUMMARY

The present invention and versions thereof offer a solution to one or more of the disadvantages mentioned earlier. To this end, the present invention relates to building blocks as described in the claims and further below.

The present invention relates in a first aspect to a building block, typically used in a set of multiple of said building blocks, comprising a substantially hollow body with a closed upper face, one or more closed walls projecting downward from said upper face, and an open lower face, wherein the closed upper face comprises a plurality of pins on the top side in a regular grid pattern, and wherein the bottom side of the upper face comprises a plurality of pins in a regular grid pattern. The walls comprise wall pins on the inwards facing side, said wall pins extending from the bottom side of the upper face along the walls, wherein said wall pins are part of the regular grid pattern defined by the plurality of pins on the bottom side of the upper face, preferably wherein the wall pins are shaped as a section of a pin on the bottom side, said section defined by a plane bisecting the pins parallel to the longitudinal axis of the pins, and more preferably said plane comprising the longitudinal axis of the pins.

The pins and the wall pins comprise at least one anchoring segment along the longitudinal axis with a radius greater than a radius of an underlying segment of the pins and wall pins respectively, and optionally a greater radius than a radius of an overlying segment of the pins. The pins are flexible, for instance made up of a flexible material or by reducing the thickness of a rigid material to provide some flexibility, and the anchoring segments of the wall pins are flexible, for instance made up of a flexible material (or by reducing the thickness of a rigid material to provide some flexibility.

The pins on the top side, and the pins and the wall pins on the bottom side are configured such that when the top side of the building block is pushed against the open lower face of an other of said building blocks, the pins of the top side of the building block and the pins of the bottom side and the wall pins of the other of said building blocks flex to allow at least one of the anchoring segments of the pins of the top side of the building block to move past the anchoring segments of at least three of the pins of the bottom side and of the wall pins of the other of said building blocks, to place the building block and the other of said building blocks in an attached state.

In a further embodiment, at rest, the pins on the top side are distanced from each other such that the anchoring segments of the pins of the top side at rest have a distance between them which defines a free space between the anchoring segments in the plane parallel to the upper face where a transverse cross-section of the anchoring segments of the pins and wall pins on the bottom side does not fit in, and wherein the underlying segments of the pins of the top side at rest define a space between the underlying segments in the plane parallel to the upper face where a transverse cross-section of the anchoring segments of the pins and the wall pins on the bottom side does fit in, in a way that when the top face of said block and the bottom face of an other of said blocks are pushed together facing each other with the anchoring segments of the pins on the top side of said block past the anchoring segments of the pins on the bottom side and the wall pins of the other of said blocks, the pins and wall pins hold each other clampingly Further embodiments are described in the claims. However, it should be noted that any of the teachings regarding the other other non-claimed aspect can be incorporated in the first aspect.

As such, it is clear that the pins, anchoring segments and other parts (corner and wall pins being sections of the pins) may comprise any further features or characteristics as defined for these elements in terms of other aspects of the invention and vice versa. As such, the teachings of the further embodiments are to be considered as further embodiments for the present aspect, and the contents to be transferable thereto. For instance, the pins on the top side of the upper face are preferably rotated over about 45° with respect to the pins (and wall and corner pins if present) on the bottom side of the upper face.

In a preferred embodiment, the anchoring segments have a maximal diameter of at most 5.0 mm, but more preferably 4.0 mm or even 3.0 mm. Most preferably, the maximal diameter is about 2.75 mm, for instance 2.7 mm or 2.6 mm or 2.5 mm or 2.4 mm or less, such as 2.2 mm, 2.0 mm.

In a preferred embodiment, the anchoring segments have a minimal diameter of at least 2.0 mm, but more preferably 2.25 mm or even 2.5 mm.

In a preferred embodiment, the pins have a minimal diameter of at least 1.5 mm, preferably at least 1.75 mm, more preferably at least 2.0 mm or even 2.1 or 2.2 mm.

In a preferred embodiment, the pins have a maximal diameter, excluding the anchoring segments, of at most 2.5 mm, preferably at most 2.4 mm, or even 2.3 mm, 2.2 mm or less, for instance 2.1 mm, 2.0 mm.

Most preferably, the minimal difference in diameter between the anchoring segments and the rest of the pin is at least 0.1 mm, preferably at least 0.2 mm, more preferably at least 0.3 mm or even 0.4mm.

Preferably, said minimal difference is capped at at most 0.75 mm, more preferably at most 0.6 mm, even more preferably at most 0.5 mm or even 0.4 mm.

An example of this would be pins with a diameter of 2.6 mm at the anchoring segments, and 2.2 mm at the other segments.

A second non-claimed aspect, relates to a tile assembly comprising at least one connection strip, preferably a plurality of connection strips, and at least one tile, preferably a plurality of tiles. The connection strip is a substantially flat body comprising a coupling side and a preferably flat back side for attachment to an underground, wherein the coupling side comprises a plurality of pins in a regular grid pattern, preferably arranged in equidistant rows and columns.

The tile comprises a coupling side and a preferably flat back side, wherein the coupling side comprises a plurality of pins in a regular grid pattern, preferably arranged in equidistant rows and columns.

The pins comprise at least one anchoring segment along the longitudinal axis with a radius greater than a radius of an underlying segment of the pins, and optionally a greater radius than a radius of an overlying segment of the pins.

The pins of the tile, and preferably furthermore the tile, and/or the pins of the connection strip and preferably furthermore the connection strip, being flexible. It should be understood that for instance, the tile itself can be made from a rigid material, with the pins on the tile themselves being essentially rigid, wherein the flexibility of the pins of the connection strip allows the pins of the tile to be pushed into between the pins of the connection strip. Vice versa, the tile pins may be made flexibly, with the connection strip pins being rigid, under the same principle. Finally, in some occasions each set of pins is flexible, and potentially also the carrier (tile or strip) thereof.

This flexibility can be ensured by making the pins of a flexible material and adding these to the building block, or can be made from the same material, where the pins are made flexible by choosing an appropriate thickness (or rather thinness), which provides for some flexibility. The pins on the tile, and the pins on the connection strip are configured such that when the coupling side of the tile is pushed against the coupling side of the connection strip, the pins of the tile and the pins of the connection strip flex to allow at least one of the anchoring segments of the pins of tile to move past the anchoring segments of at least three of the pins of the connection strip, to place the tile and the connection strip in an attached state.

In a further embodiment, at rest, the pins of the tile are distanced from each other such that the anchoring segments of the pins of the tile at rest have a distance between them which defines a free space between the anchoring segments in the plane parallel to the coupling side of the tile where a transverse cross-section of the anchoring segments of the pins of the connection strip does not fit in, and wherein the underlying segments of the pins of the tile at rest define a space between the underlying segments in the plane parallel to the coupling side of the tile where a transverse cross-section of the anchoring segments of the pins of the connection strip does fit in, in a way that when the tile and the connection strip are brought together with the coupling surfaces facing each other, the pins hold each other clampingly.

Further embodiments are described in the claims. However, it should be noted that any of the teachings regarding the other aspects of the invention can be incorporated in the second non-claimed aspect.

As such, it is clear that the pins, anchoring segments and other parts may comprise any further features or characteristics as defined for these elements in terms of other aspects of the invention and vice versa. As such, the teachings of the further embodiments are to be considered as further embodiments for the present aspect, and the contents to be transferable thereto. For instance, the pins on the connection strip are preferably rotated over about 45° with respect to the pins on the tiles, while the grids of the tiles and connection strips are essentially the same (but shifted relative to each other when connected).

A further non-claimed aspect relates to composite fasteners consisting of at least a first click element or carrier and a second click element or carrier, at least wherein the first click element comprises pins provided on at least one side, the coupling surface, and an opposite second click element that contains at least pins provided on at least one side, the coupling surface, and wherein the two click elements can click together. The click elements or carriers comprise a coupling surface wherein many pins are provided, preferably in a regular grid pattern, preferably with equidistant rows and columns so that they are provided in a regular matrix pattern, typically rectangular or square. The pins comprise at least one anchoring segment along the longitudinal axis, which has a greater radius than an underlying segment (recess), and, optionally, a larger radius than an overlying segment (recess or pin top). The pins are preferably flexible, for instance made of a flexible material or by reducing the thickness of a rigid material to provide some flexibility.

Here the pins of the first carrier are distanced from each other at rest so that the anchoring segments of the pins of the first carrier have a distance between them which defines a free space between the anchoring segments in the plane parallel to the first carrier where a transverse cross-section of the anchoring segments of the pins of the second carrier does not fit in. In addition, they are distanced from each other in such a way that the underlying segments of the pins of the first carrier at rest define a space between the underlying segments in the plane parallel to the first carrier where a transverse cross-section of the anchoring segments of the pins of the second carrier fits in, such that when the first and second carrier are brought together with the coupling surfaces facing each other, the pins hold each other clampingly.

According to a certain preferred design, the click elements comprise at least one coupling surface with many pins on top, preferably in a regular grid pattern, preferably with equidistant rows and columns so that they are provided in a regular matrix pattern, typically rectangular or square.

The pins comprise at least one anchoring segment along the longitudinal axis, which has a greater radius than an underlying segment (recess), and, optionally, a larger radius than an overlying segment (recess or pin top). The pins are preferably flexible, for instance made of a flexible material or by reducing the thickness of a rigid material to provide some flexibility.

The pins are distanced from each other on the carriers (click elements) such that the anchoring segments of the pins of the first carrier have a distance between them equal to or greater than the pins at the recesses (underlying and optional overlying segments) but smaller than the radius of the anchoring segments of the pins of the second carrier, such that when the two carriers are brought together with the coupling surfaces facing each other, the pins hold each other clampingly.

The shape of the pins must be considered. For example, with square transverse cross-sections, a different interaxial distance must be considered compared to disc-shaped transverse cross-sections of the pins.

"Transverse cross-sections" refers to cross-sections of the pins in a plane perpendicular to the lengthwise axis or longitudinal axis of the pins. Depending on the specific shape of the cross-section, the dimensions of the anchoring segments and the recesses below can be adjusted to ensure successful anchoring. In addition, the dimensions can also be further adjusted (more significant difference between the radius of anchoring segments and recesses) to obtain a more substantial or smaller difference to obtain a weaker connection.

According to a preferred embodiment, the click elements are periodically provided with a series of pins that are provided with a set of protrusions or anchoring segments (also called ribs) and recesses below on the side, with the protrusions of the pins of the first click element adjusted to match the recesses under the anchoring segments of the pins of the second click element and vice versa, and preferably so that they fit into the recesses of the pins of the second click element and the protrusions of the second click element into the recesses of the first click element. In what follows, these recesses are also referred to as a overlying, underlying, or intermediate segments relative to the ribs (or protrusions or anchoring segments).

According to a preferred embodiment, the first and/or second carriers are flexible. Preferably, the carriers and pins on them are single-piece, allowing, for example, manufacture via 3D printing, injection molding, or other automated processes.

According to a preferred embodiment, the pins have multiple anchoring segments, with segments (recesses) with a lower radius in between. Preferably, all anchoring segments have substantially the same shape and dimensions and the recesses in relation to each other.

The general principle of the present invention is a method in which the pins of two different click elements exert a clamping effect on each other to obtain a clamping effect between the replaced click elements.

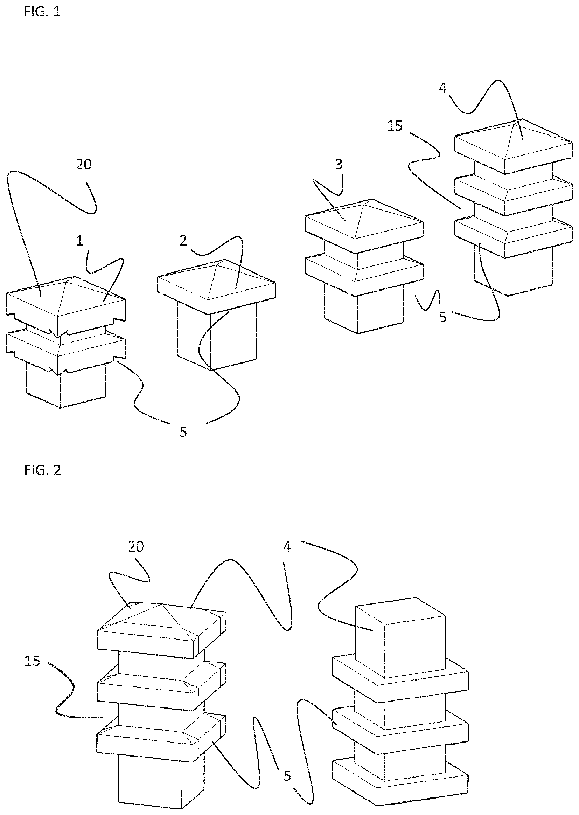

A quick closure is formed by clicking two identical click elements together. This contains a base consisting of a plastic panel with pins on one side, wherein the sides of these pins are provided with recesses. These recesses have the shape of a barb. The hooks of these barbs are directed towards the surface of the base, with the function of the barb being active in the direction away from the surface and perpendicular to the surface of the base panel. Preferably, barbs are provided at the corners of the anchoring segments, as also visible in Fig. 1. In addition, by suitable positioning of the barbs, it can be ensured that the barbs of the pins of a first click element for two anchored click elements at rest, coincide with the barbs of the pins of the second click element, and thereby hooking together. The number of recesses is at least one per side, but preferably two, three, or even more. The pins can be square in shape, with the top beveled and/or rounded. These pins are at a certain distance from each other via an ordered pattern. This distance is equal in the x and y directions. The axis distance of the different pins is preferably equal to the distance of the maximum side or diameter of the pins increased by 50%, making it possible to link two click elements with each other. The height of the pins is preferably equal to the axis distance of the pins but can be longer or shorter depending on the desire for a stiffer or more flexible coupling. The sides of the adjacent pins are positioned in parallel with respect to each other. The intention is to apply the click elements that are identical to each other as a quick release. Two identical click elements are placed on top of each other with the top sides of the pins facing each other, with one click element rotated 45° in relation to the other click element in such a way that the pins of the one click element are rotated 45° around their longitudinal axis in relation to the pins of the second click element when brought together for linking. The two click elements are then pressed together. Since the one click element is rotated 45° in relation to the other click element, the patterns of the two click elements do not match. As a result, some pins of the one click element push the pins of the other click element away to a certain angle, those other pins hook into each other or almost do not push each other away, and some pins do not actively hook into other pins. With the (barb) hooks or ribs on the side of the pins, the protrusions are smaller than the recesses of the corresponding pins of the other click element in which they hook. In this version, the two click elements can be connected to each other in any place. A connection can also be made that has a curved shape in the basic direction.

A quick closure is formed by clicking two different click elements together. The first click element contains a base consisting of a plastic panel with pins on one side, wherein the sides of these pins are provided with recesses and ribs anchoring segments. These recesses are in conjunction with the anchoring segments equipped with one or more barbs. The hooks of these barbs are directed towards the surface of the base, wherein the function of the barb is active when the retained element moves in the direction away from the surface (and perpendicular to the surface) of the base panel.

The number of recesses is at least one per side, but preferably two, three or even more. The pins can be square in shape, with the top beveled and/or rounded. These pins are at a certain distance from each other via an ordered pattern. This distance is preferably essentially equal in the x and y directions. The interaxial distance between directly adjacent pins (closest pins) is preferably at least 2.0 times the minimum radius of the anchoring segments, more preferably at least 2.10 times the minimum radius, and most preferably at least 2.25 times to even at least 2.5 times. This ensures a certain resistance between the anchoring segments when the pins of click elements are brought past each other.

Preferably this interaxial distance is a maximum of 4.0 times the minimum radius, but more preferably this is lower, namely a maximum of 3.5 times, or (2+√2) times the minimum radius. With the most obvious preference, it is a maximum of 3 or 2.5 times the minimum radius. By limiting this, it is ensured that once the pins of the click elements are linked (with the anchoring segments that are moved past each other), they cannot simply be disconnected due to the lateral forces that the pins exert on each other.

The interaxial or axis distance of the different pins is preferably equal to the distance of the maximum size of the pins plus 50%. The height of the pins is preferably equal to the axis distance of the pins but may vary depending on further requirements.

In a preferred embodiment, the pins are provided with two or more ribs or anchoring segments on top of each other, making it possible to anchor the click elements to each other on multiple levels, thus obtaining a more robust and more reliable attachment.

In a preferred embodiment, the anchoring segments have a larger minimum radius than the maximum radius of the underlying segments. This guarantees a firm anchoring under any relative orientation.

The adjacent sides of the pins are arranged in parallel to each other. The second click element is similar in execution to the first click element, wherein the pins are provided in the same pattern but are rotated at an angle of 45° around their own axis, so the adjacent pins are facing each other with the angular sides (with the pins of the first click elements with the sides facing each other).

The intention is to apply the two different parts as a quick closure. Two different click elements are placed on top of each other, with the header sides of the pins facing each other, wherein the pins of the one click element fit between the pins of the other click element. Then, the two click elements are pressed together. Since the pins of the second click element are rotated 45° in relation to the first click element, but the patterns of the two click elements do match, the pins will be fixed in the free spaces. Each pin will be clamped by a pin of the other click element in the middle of each side of it. With this arrangement, almost all pins remain upright. In this version, only connections can be realized with an interval equal to the interaxial distance or axis distance between the different pins. Also, no connection can be made that has a pronounced curved shape.

However, under certain adaptations, curved connections are enabled, for instance by increasing the distance between the pins according to a first axis in the plane of the grid pattern, allowing the carriers to be connected under a curved shape, with the curve being along said first axis (i.e., curved around a second axis in the plane of the grid pattern, perpendicular to the first axis).

Alternatively (or building further on the above), the carriers can be connected after being heated slightly, to increase their deformability/elasticity. Once the connection is established, the carriers will return to a lower temperature (naturally or artificially) and set themselves in a strong connection.

The adhesion between the different click elements is optimal if the recesses have the shape and function of barbs. However, in the setups described in the previous versions, it is very complex and expensive to form the pins by forming them directly with injection molds or other techniques that use molds to form the recesses in the sides of the pins.

According to an alternative technique, the recesses are formed after the pins themselves are formed and after they have been removed from the molds. The recesses in the side of the pins or even the shape of the pins themselves can be formed in a second phase by using machining tools that pass along the sides of the pins and machining parts of the pins, by using, for example, small chisel-shaped tools where a piece of the pins can be removed in several steps so that they form the desired recesses such as forming the barb. This is possible for the different shapes as described in the previous versions.

The pins may have a different shape than squares in terms of a transverse cross-section. These can be round, triangular or polygonal (preferably regular polygons, especially hexagonal or octagonal) in general. In height, the base shape of the pins can be straight, conical, inverted conical, or any other arbitrary shape. However, the preferred shape is to make it slightly conical with a minimum angle of 0-10°, preferably 0.5°-5° or even 1°-2°, to make it easier to remove the shape from the production mold after injection molding.

Preferably, the width-height ratio of the pins is a ratio that is between one to two and one to three of the diameter or side in the base in relation to the height of the pin.

The top of the pin is preferably rounded or at least beveled so that the pins of the opposing click elements can push each other away if they touch each other on the ends and can, therefore, more easily interlock. Preferably the same applies to the top of lower ribs or anchoring segments for the same reason.

The two click elements may be identical in a pattern when hooking together. Here, the center points of the pins are equally far from each other according to the same pattern. When hooking in the two click elements, the pins are not or hardly pushed away from each other, but the protrusions of the pin of the one click element hook into the recesses of the other click element and vice versa. In the version where the pins have a square shape, the pins of the opposite click element should be rotated 45° around their axis, but the same pattern is used. This has the effect that when clicking the two click elements together, the angular sides of the pin of one click element press into the lateral sides of the other pins. This gives a point load that makes it possible for the pins to be pressed together with a compressive force and pulled back apart with a tensile force, which is workable for its applications as is now applied in the current so-called hook and loop fastener applications. In particular, this is possible due to the flexible nature of the click elements and the pins, which makes it possible to detach external pins with the necessary (conscious) manipulation, and thus gives the pins located more to the inside the necessary freedom of movement to be detached. With this version, it is not or hardly possible that the click elements can take on a curved shape. Again, it is noted that some adaptations/alterations can be applied to enable curved shape connections for the fastener, such as extending inter-pin distance along a first axis and/or heating the carriers before connection, as mentioned previously.

The two click elements may be identical in a pattern when hooked together. The center points of the pins are the same distance from each other according to the same pattern and arrangement. When hooking in the two click elements, the two click elements are preferably rotated 45° in relation to each other before pressing them together. Some pins are not or hardly pushed away from each other, and other pins push the opposing pins away from each other to a large or lesser extent. In this version the click elements can take on a curved shape. An additional feature is that the click elements can be connected in a stepless way.

Preferably, the dimensions of the pins of the click elements are substantially the same (similar width and length), although this may differ. For example, you can opt for thicker pins on one click element and thinner pins on the other, or even a mix according to a predetermined pattern, although the latter is less preferable as the two click elements must be placed more accurately in relation to each other for a good link.

The materials of the click elements can be composed of a uniform material such as a plastic such as LDPE, PLA, PVC, EVA, Z-PVC, PU, TPE, TPV, without having an exhaustive effect. Moreover, these can be hard, flexible, or semi-flexible. But other materials, such as carbon, steel, copper, etc, are also possible. These may or may not be flexible.

Also, the click elements that can be clicked together can be different in material.

The materials of the click elements may be constructed from a composite material such as a plastic base combined with a steel band, a plastic base combined with steel pins, a steel base with plastic pins, or other possible variants.

The basis can be further supplemented with a hook connection. This hook connection has the function of blocking at least one side of the connection. The hook connection can be composed of a pin with a sphere or other widening on the one click element and an opening in the base panel. The opening in the other click element is provided so that the sphere of the pin can pass through smoothly and is also provided with an offshoot of the opening that is narrower than the opening through which the sphere can pass. After the sphere has been applied through the opening, the one click element is shifted relative to the other click element so that the sphere is positioned behind the narrower opening so that the two click elements are locked with each other. Since this connection is relatively weak, the two click elements are applied together according to the techniques described in the present invention. In a setup where the pins of one of the click elements are pushed through a fabric, all pins of this click element are pushed through the meshes of the fabric, whether or not including the pins provided with the spheres. The openings provided in the other click element are applied over the spheres and blocked by means of a pulling or pushing movement. Then the two click elements are pressed together. When tightening the fabrics in an opposite movement, an outward pressure will be applied to the pins of the click elements. The hook connection will absorb this pressure so that the pins of the different click elements remain hooked together and can therefore absorb high lateral forces. The crochet technique described above can be replaced by alternatives that have the same result within the intended objective.

The dimensions of the two click elements are different in size. For example, the thickness of the different base panels can differ, so that you get, for example, a click element that is quite stiff in which a more flexible click element can be clamped. But the click element's length and/or width can also vary. So, for example, several smaller click elements can be placed on a larger click element.

In an alternative aspect, the dimensions, or at least the thickness, are substantially the same for both click elements.

The dimensions of the pins themselves can also be different from each other. These can be compared to the different click elements, but also within the same click element, different sizes, shapes, numbers, and versions of the pins can be possible. The recesses on the pins can also be different with the different click elements but also within the same click element.

In a certain version, the attachment between the different click elements uses a mix of attachment intensity in which the pins of the different click elements interact with each other in different places differently. By distributing the pins unordered over the base panel, a configuration can be created in which the click elements are clicked together at any place and/or at a random angle, whereby enough pins then apply pressure to each other to obtain a sufficiently strong connection.

The attachment between the different click elements uses a mix of attachment intensity in which the pins of the different click elements interact with each other in different places in a different way. By dividing the pins over the base panel in an orderly but not symmetrical and/or linear way, a configuration can be created in which the click elements are clicked together at any place and/or at any angle, whereby enough pins then apply pressure to each other to obtain a sufficiently strong connection.

The click elements can be provided with pins on both sides of the base panels. Another possible version is that the base panel is provided with pins on one side and on the other side a device to connect with another material where a different technique is needed, such as barbs, glue connection, screw connection, clamp connection, and other possible known connection techniques.

The base of the click element may be part of a tool or other instrument. For example, the click element can be integrated into a clamping plier or other clamping mechanisms where the jaws of the tool or instrument is equipped with the pins as described**.** But other parts such as a profile or a tube can also be provided with the described pins.

The pins have the following possible shapes in terms of transverse cross-section, rectangle, square, round, polygon, or other possible geometric shapes. The shape may possibly be arbitrary in shape.

All sides of the pin are preferably provided with recesses to make the engagement in the opposite pin as efficient as possible.

The combination of recesses and protrusions can come in the execution of: barbs, squares, triangles wherein the flat side is preferably arranged so that it hooks on the flat side of the opposite pin, rib shapes wherein the side is composed of layered protrusions, this with a similar effect as in 3D printing, recesses in any shape, protrusions in random shape and other possible shapes that allow the hooking of the two opposing pins. Another possible version is that the pins have a rough surface so that the pins experience more resistance when they slide over each other, and thus a more significant clamping effect is obtained.

The pins of the opposing click elements can be permanently connected to each other by using an adhesive bond. This can be by adding external glue or heating the click elements so that the pins merge. A variant of this is to obtain a semi-permanent adhesive bond by using external glue with a limited adhesive strength or to determine the pins' material so that these spiked ones can melt into each other.

The operation:
The principle of the invention is to clamp the pins by applying two click elements that are provided with pins by moving them in the opposite direction toward each other. Here the pins push laterally against each other, creating a clamping effect.

There are two main configuration techniques:
1) here, a random curved arrangement is possible
   - Pins are pushed away in all directions
   - Preferably, the click elements used are identical but can also be variable
2) a random curved arrangement is not possible

The click elements are preferably identical, depending on the version (sometimes the pins of the one click element must be longer than the pins of the other click element).

Only the curved shape is possible if the pins are further apart in an ordered and proportional way than the pins of the other click element, and this is only in the x-direction and not in the Y direction, for example.

Possible applications without wanting to work exhaustively are:
Connecting bandages or bandages where, according to a preferred embodiment form, the pins of one click element are longer than the other. The click element with the longer pins is pressed through the bandage. For this specific version, it is preferable to use a bandage with perforations wherein the central point of the perforations is equal to the central points of the pins applied by the bandage. The second click element is connected to the bandage on the pinless side, preferably at the end of the bandage. This connection can be made by a melting connection in which the bandage is fused in the click element, but it can also be done via a glue connection, a connection with barbs, or another connection.

Another possible application is a connection for a walking accessory such as a shoe. The hook and loop fastener technique is already frequently used in shoes to replace and/or supplement the well-known laces. The disadvantage of the hook and loop fastener technique is that over time it becomes less efficient in the adhesive force and that dirt can drastically reduce the operation of the hook and loop fastener. The aforementioned disadvantages can be eliminated by applying the present invention's fastening technique. For this application, it is preferable to use the version in which the attachment can take on a curved shape.

Other possible applications without wanting to enumerate exhaustively are belt connections, tent connections and fences, classic wall connection for hanging of mirrors and related applications, fixing of or to window screens (the mesh stucture is ideal for coupling with the carriers), holding seat upholstery in place, fixing mats, and the like.

### DESCRIPTION OF THE FIGURES

The following description of the figures of specific embodiments of the invention is:
Merely exemplary in nature and is not intended to apply or use the present teachings. In the drawings, corresponding reference numbers indicate similar or corresponding parts and characteristics.
Fig 1: is a perspective view of five possible pin versions
Fig 2: is a view in perspective of two possible pin versions in opposite arrangement
Fig 3: is a view in perspective of pins of opposing click elements that interlock with the pins of the different click elements positioned at the same center distance from each other, but the pins of one engagement click element are rotated 45° in relation to each other the other engagement click element.
Fig 4: is a top view of a principle arrangement of opposing click elements positioned next to each other where the pins of the different click elements are positioned at the same center distance from each other, but the pins of one engagement click element are rotated 45° in relation to each other the other engagement click element.
Fig 5: is a top view of a principle arrangement of opposing click elements that interlock with the pins of the different click elements positioned at the same center distance from each other, but the pins of one engagement click element are rotated 45° in relation to each other the other engagement click element.
Fig 6: is a perspective view of pins of opposing click elements that are identical in structure, but where the two click elements are rotated 45° in relation to each other.
Fig 7: is a top view of pins of opposing click elements that are identical in structure, but where the two click elements are rotated 45° in relation to each other.
Fig 8: is a top view of a principle arrangement of opposing click elements positioned next to each other where the pins of the opposing click elements are identical in structure but where the two click elements are rotated 45° in relation to each other.
Fig 9: is a top view of a principle arrangement of opposing click elements that interlock in which the pins of the opposing click elements are identical in structure but where the two click elements are rotated 45° in relation to each other.
Fig 10: is a view in perspective of a click element equipped with blocking pins along one side of the click element in the form of pins with a sphere and another click element equipped with recesses in which the pins with sphere can be locked.
Fig 11: is a view in perspective of a click element that is additionally equipped with blocking pins along two sides of the click element in the form of pins with a sphere and another click element that is additionally equipped with recesses in which the pins with sphere can be locked
Fig 12: is a view in perspective of a click element that is additionally equipped with blocking pins along one side of the click element in the form of pins with a sphere and another click element that is additionally equipped with recesses in which the pins with sphere can be locked where the pins of the click element, which is equipped with the blocking pins, is positioned through the openings of a material and the other click element, which is provided with the recesses, is connected to material along the side where no pins are provided.
Fig 13 is a view in perspective of a version in which two click elements are connected by a bridge connection in an open position. The pins of the different click elements are positioned at the same center distance from each other, but the pins of one engagement click element at 45° are rotated in relation to each other the other engagement click element. The single-click element is also equipped with an eye design.
Fig 14: is a view in perspective of a version in which two click elements are connected by a bridge connection in a closed position. The pins of the different click elements are positioned at the same center distance from each other, but the pins of one engagement click element at 45° are rotated in relation to each other the other engagement click element. The single-click element is also equipped with an eye design.

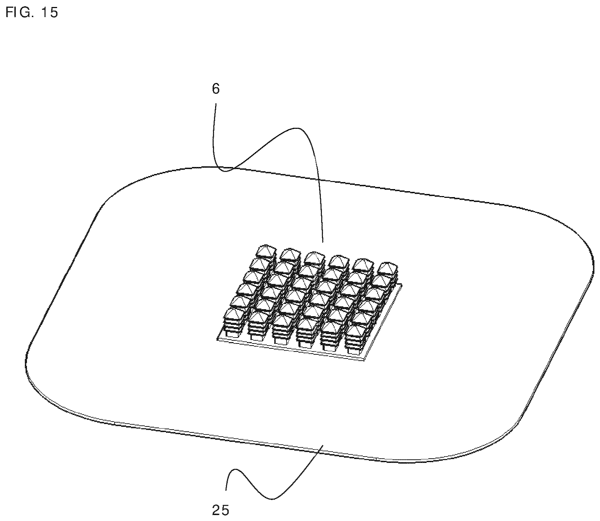

Fig 15: is a view in perspective of a performance in which the click element is combined with a foil.
FIG 16: is a view in perspective of a block version in which the click block's pins are positioned externally at the top and internally on the bottom. The pins internally are rotated 45° compared to the external pins. In this preferred embodiment, the pins are provided with double ribs.
FIG 17: is a view in perspective of the underside of a block-shaped version in which the click block's pins are positioned externally at the top and internally on the inside at the same center distance from each other. The pins are internally rotated 45° compared to the external pins. The pins are provided with double ribs in this preferred embodiment. This version is also equipped with partitions.
FIG 18: is a view in perspective in the transverse section of two blocks as described in Figures 16 and 17
FIG 19: is a view in perspective of two tiles with pins not according to the the present invention in combination with a connection strip that is also equipped with pins as provided on the tiles but rotated 45°.
FIG 20: is a view in perspective in detail of two tiles in combination with a connection strip. The connection strip is additionally provided with an adhesive strip and sealing strip.
FIG 21: is a view in perspective of a closure strip in combination with a bracket.

### Components

1. Pin with double barb: the description refers to a pin with a square shape in the base, equipped with 2 ribs wherein the bottom of the ribs is the shape of a barb.
2. Single rib pin: the description refers to a pin that has a square shape in the base and is equipped with one rib wherein the bottom of the rib has a flat bottom
3. Double rib pin: the description refers to a pin that has a square shape in the base and is equipped with two ribs wherein the bottom of the ribs has a flat bottom
4. Triple rib pin: the description refers to a pin that has a square shape in the base, is equipped with three ribs wherein the bottom of the ribs has a flat bottom
5. Rib: these are the protrusions on the pins that preferably connect to the ribs of the opposite pins, depending on the execution of the ribs.
6. Click element one: this is the combination of the base panel and pins
7. Click element two: this is the combination of the base panel and pins, wherein the pins are in the same place but are rotated 45° compared to click element 1
8. Click element with locking pins along one side: this is a click element wherein extra blocking pins are provided along one side with the function to block the opposite click element
9. Click element with cutouts on one side: this is a click element wherein cutouts are provided along one side with the function to block the opposite click element
10. Click element with locking pins on two sides: this is a click element wherein extra blocking pins are provided along two sides with the function to block the opposite click element
11. Click element with cutouts on two sides: this is a click element wherein extra blocking pins are provided along two sides with the function to block the opposite click element
12. Fabric with cutouts: this is a preferably woven fabric that has openings through which the pins of the click element fit. Preferably, the center points of these openings are as far apart as the center points of the pins of the click element that is pushed through them. Also, the openings in the fabric are the same size or slightly larger than the largest lateral distance from the pin that must pass through it.
13. Click element with the eye: this is a combination of two opposing click elements that are connected using a bracket and wherein an extra protrusion is provided with an extra opening
14. Blocking pins: this is formed by the combination of a pin with a sphere
15. Cutout pin: These are the recesses in the pin in which the ribs of the opposite pin fit.
16. Blocking cutout: This is the cutout in the base panel through which the sphere of the blocking pins fits.
17. Pin general: this is the pin of the click element that clamps into the opposite pin. It can take any form as described in this document.
18. Fabric/material without cutouts: this is a fabric or material in which preferably no pins are pushed through and is applied to the side of the click element that does not contain pins.
19. Eye: this is an extra opening in the base of one of the click elements
20. Top: this is the top of the pin that is preferably oblique and/or rounded in shape
21. Base panel: this is the panel of the click elements on which the pins are provided.
22. Bracket: this forms the bridge between 2 click elements that form part of the execution of a click element with an eye. This is preferably flexible.
23. Extension: this is an extension of one of the elements in which an opening is also provided through which a suspension device is formed
24. Sphere: This is the bulge to block the blocking pin behind the base of the opposite element.
25. Foil: this is a combination with the base panel so that the element can be attached via a suction cup function
26. Click block: is a click element in block shape where pins are applied externally and internally. This block can play the role of a toy block, like the well-known basis for a Lego block.
27. Wall: the wall of the click block that encloses the internal pins
28. Wall pin: these are pins that are at least partially integrated into the walls of the click block
29. Tile: this is a tile version in which a tile is provided with pins at the edges**.**
30. Connection strip: provides the connection between the different tiles. Preferably composed of flexible material and can be provided with an adhesive strip and sealing strip
31. Adhesive strip: this can be additionally provided on the connection strip so that the connection strip can be glued to the surface
32. Sealing strip: if it is provided on the connection strip, the seal between the different tiles can be waterproofed without having to use an additional sealant such as liquid silicone
33. Closure strip: this is a version that is suitable for orthoses, for example
34. Bracket: this provides an additional connection with the element to be closed, such as an orthosis
35. Opening: this opening in the closure strip makes it possible to connect the closure strip to the orthosis.
36. Upright wall: this is provided on the sides of click element one and ensures that the second click element is positioned correctly
37. Flexible connections: these ensure the connection between click elemens one and click element two.
38. Internal pins: these are the pins incorporated into the click block and are therefore surrounded by the walls of the click block.
39. Partition: the partition at least partially connects the internal pins. In some applications, it can also connect external pins.
40. Slot: this is the bracket part through which the second click element can be pushed.

### Advantages

The present invention is mainly a competitor for the hook-eye connection and, more specifically for the version known under the brand name Hook and loop fastener.

It has the following advantages
- Minimal noise: With the traditional hook-eye connection, loosening the joint causes a significant noise due to pulling the hooks from the loops. This is not the case with the present invention.
- Washable and hygiene: with the traditional hook-eye connection, dirt sticks to the hooks, and dirt creep into the eyes. In the execution of the present invention, no dirt sticks, and is also very easy to clean, both manually and mechanically. The click elements can also be disinfected easily, making it suitable for use in the food and medical sectors. But also for swimming pools, playgrounds, hospitals, etc.
- Environmentally friendly: the click elements can be constructed from one material, and this material can be an environmentally friendly material such as bioplastic. This makes it not only environmentally friendly but also relatively cheap to produce.
- Adaptable: with most versions in plastic, it is also possible to cut and/or cut the click elements to size.
- High forces: the specific structure of the click elements means that the lateral forces that can be absorbed are much higher than the traditional hook-eye connection. This makes the present invention suitable for heavier transport and vehicles and for more extreme applications.
- Glueable: since the click elements in most cases do not contain a woven fabric, and the click elements can also be glued together.
- Cheaper production: The simple construction of the click elements means that the production cost is much lower than with the traditional hook-eye connection, especially in the versions wherein the opposite click elements are identical or almost identical.
- Reliability: with the traditional hook-eye connection, hooks regularly break off after multiple uses. This does not play a role in the present invention
- Additional advantages are that most versions, according to the current invention, do not immediately stick. So it does not hurt if you hold the pins or walk over them and does not stick to the clothes if you wash them together, for example.

### DETAILED DESCRIPTION OF THE INVENTION

The present invention relates to a building block.

Unless otherwise defined, all terms used in revealing the invention, including technical and scientific terms, have the meaning as generally understood by one of the ordinary skills in the field to which this invention belongs. Through further guidance, term definitions have been included to better appreciate the present invention's teachings.

As used herein, the following terms have the following meanings:
"Over" as used herein, referring to a measurable value such as a parameter, an amount, a duration, and the like, is intended to allow variations of +/- 20% or less, preferably +/-10% or less, rather +/-5% or less, even more preferably +/-1% or less, and with even more preference +/-0.1% or less of and of the specified value, to the extent that such variations are suitable to perform in the revealed invention. However, it should be clear that the value to which the modifier refers "approximately" is itself also specifically stated. "Provided", "consisting of" and "includes" and "consisting of" as used herein are synonymous with "comprise", "comprising", "comprises" or "contain", "containing", "contains" and are inclusive or open terms that specify the presence of what follows, for example, a component and excludes the presence of additional, unrecited components, characteristics, click elements, members, steps, known in the technique or revealed therein.

Furthermore, the terms first, second, third, and the like in the description and in the claims are used to distinguish between similar click elements and are not necessary for: describing a sequential or chronological order unless otherwise indicated. It is understandable that the terms thus used are interchangeable under the right circumstances and that: the embodiments of the invention described here may be in sequences other than those described or illustrated herein.

The recitation of numerical ranges by endpoints includes all numbers and fractions housed within that range and the endpoints mentioned.

While the terms 'one or more' or 'at least one, such as one or more or at least one member(s) of a group of members, is *necessarily* clear, by further example, the term includes a reference to one of the said members, or to two or more of the said members, such as, *for example,* ≥3, ≥4, ≥5, ≥6 or ≥7, etc. of said members, and to all said, members.

Unless otherwise defined, all terms used in revealing the invention, including technical and scientific terms, have the meaning as generally understood by one of the ordinary skills in the field to which this invention belongs. Through further guidance, definitions for the terms used in the description are included in the present invention's teachings. The terms or definitions used herein are given solely to assist in understanding the invention. Reference in this specification to "one embodiment" or "an embodiment" means that a particular feature, structure, or feature described in connection with the embodiment is included in at least one embodiment of the present invention.

So, the appearances of the expressions "in one composition" or "in a composition" in different places in this specification do not necessarily all refer to the same version but can. In addition, the special features, structures, or characteristics can be combined in any appropriate way, as would be clear to a professional from this description, in one or more embodiments.

In addition, although some embodiments described herein include some but not other features included in other versions, combinations of features of different versions are intended to fall within the scope of the invention, as defined by the claims, and constitute different performances, as will be understood by the craftsman.

For example, in the following claims, any of the claimed embodiments can be used in any combination.

The terms "first click element" and "second click element" refers to two types of click elements, which can still be of the same type.

When using the x, y, and z-axis as an indication, the example, wherein the click element is arranged horizontally, refers to the x-direction as the horizontal longitudinal direction, i.e., the direction on which the forces are applied. The y-direction stands for the width in the horizontal direction of the click element, and the z-axis is the vertical direction in which the click elements are moved to or from each other.

When defining the parts, such as the pins, gradients can be used to determine the shape of the pins according to the z-direction. This is preferably between 0 and 1°, but can also work with gradients between 1 and 3°, with possibilities up to 5°, and depending on the implementation of combination recesses and protrusions of the pins can, the shape of the pins themselves or a combination of shapes and/or different materials of pins, the slope of the pins can be ≥5° and the gradients can even be negative.

When defining the composition of the click elements wherein the arrangement of the pins of one element in relation to the other element is determined, it is preferably 45° but can also be larger than 45°. Depending on the design and/or composition of the elements, the shape of the pins themselves, or a combination of shapes and/or different materials of pins, the rotation difference between them can be between 0 and 180°.

The basis of the invention is the principle whereby the pins 17 of opposite click elements are provided with recesses wherein the pins 17 exert a certain pressure on each other if the click elements are pressed on each other and the opposite pins 17 touches each other. Fig. 1 shows some possible versions of pin 17 that allow efficient clamping. The preferred shape is a square as a basic shape that runs very slightly conical upwards, in the z-direction, to enable production via spray molding. Preferably, the angle of the conical shape is less than 1°. Fig. 1 shows four possible embodiments. The most leftside pin 1 has double ribs 5 that have the shape of a barb at the corners of it. These types of pins 17 are the most efficient but are quite more difficult to manufacture. The second pin 2 is provided with a single rib 5 with a flat bottom, the third pin 3 with double ribs 5 with a flat bottom 3, and the fourth pin 4 with a triple rib 5 with a flat bottom. The versions where the ribs 5 are provided with a flat bottom are easier to produce than the ribs 5 that has the shape of a barb. When applying the opposite click elements, the ribs 5 hook together with their flat side. Note that the barbs can also be provided in the second and fourth pin versions. Fig 2 shows single pins 4 with triple ribs 5 with a flat bottom arranged in the opposite direction.

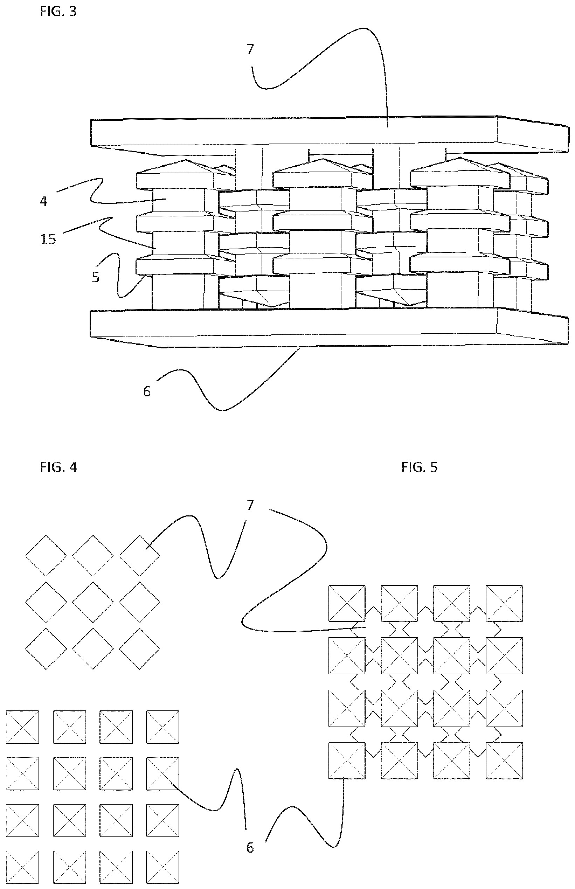

In Fig 3, two opposing click elements interlock with the pins 4 of the different click elements positioned at the same center distance from each other, but pins 4 of one engagement click element 7 are rotated 45° in relation to the other engagement element 6. The pins 4 of both click elements are equipped with three ribs 5. When engaging, the protrusions, which form the ribs 5 of the pins 4, are positioned in the recesses 15 of the opposite pins 4. Fig 4 shows a principle representation of the two click elements in which the pins of one click element 7 is rotated 45 ° in relation to the other click element 6 and positioned towards each other. Fig 5 shows the basic components when the two click elements are clicked together, as shown in Fig 3. In this version, the pins are square in shape so that the angular sides of the pins 4 push into the middle of the long sides of the opposite pins 4.

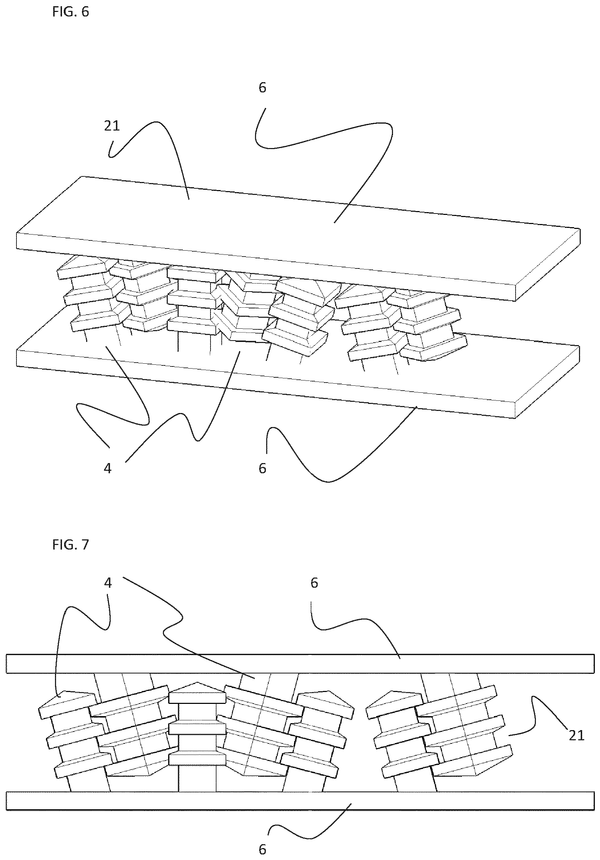

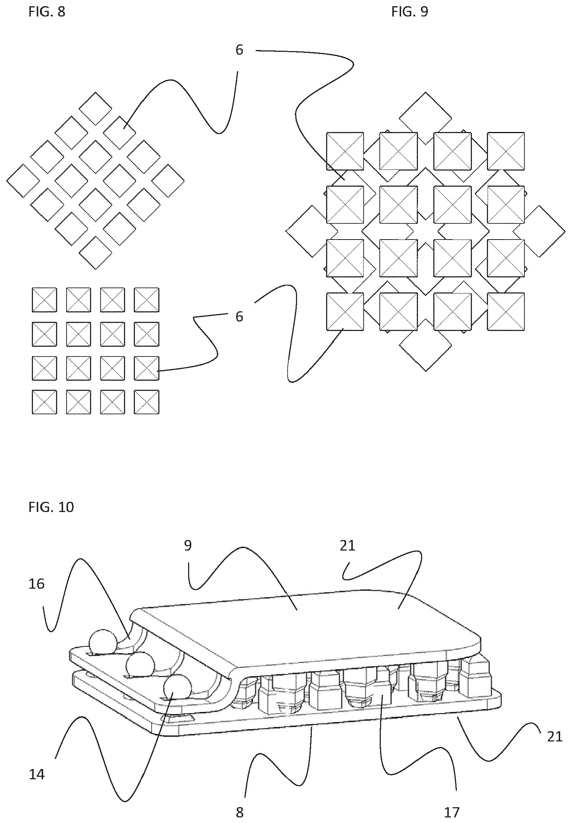

In Fig 6 and Fig 7, replaced opposite but identical click elements 6 interlocks with the two click elements are rotated 45° in relation to each other. The pins 4 of both click elements are equipped with three ribs 5. When taking hold, the protrusions, which form the ribs 5 of the pins 4, are positioned as much as possible in the recesses of the opposite pins 4 but more randomly. Fig 8 shows a principle representation of the two click elements, in which one click element 6 is rotated 45 ° in relation to the other click element 6 and positioned towards each other. Fig 9 shows the basic composition if the two click elements 6 are clicked together, as shown in Figs 6 and 7. In this version, pins 4 are square in shape, but the sides and corners interlock in a random way. The chamfered sides of the top of the pins cause the pins to lie next to each other and interact, but this is done fairly randomly, depending on the desired distance and the bending of the base panels.

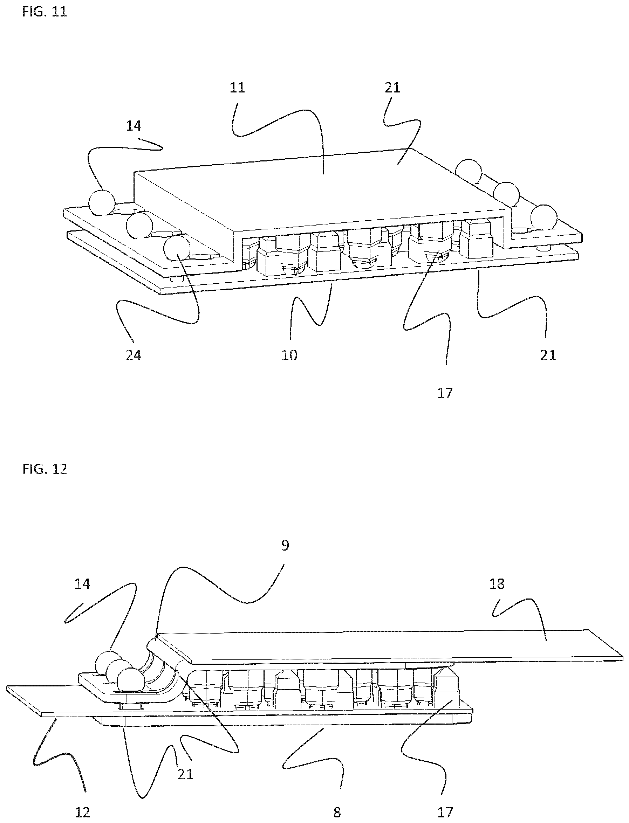

In some situations, it may be necessary to provide an additional blockage. For example, if the fastener is used to attach a bandage. As shown in Fig 12, on the base panel 21 of element 8, which is equipped with blocking pins 14, there is a substance 12 with openings. Because of this fabric 12, both the pins 17 and the blocking pins 14 are pushed so that the fabric 12 touches the base panel 21. The other click element 9 that is equipped with the blocking recess 16 is the fabric 18 on the outside of the click element 9. The connection between the click element 9 and the fabric 18 of, for example, the bandage can be done by means of glue, but also, for example, by providing barbs or a combination of these. As shown in Fig 10, the two click elements 8 and 9 are clicked together with the blocking pins 14 fitting through the blocking recess 16. When the two click elements 8,9 click together, the blocking pins 14 are first placed in the blocking recesses 16 at a certain angle. The blocking recesses have a shape that is defined so that the sphere 24 of the blocking pins 14 fits through them, with a spur that narrows so that the sphere 24 remains behind the base panel 21 of the click element 9. As soon as the sphere 24 has reached the final position of the constriction, the two click elements 8, 9 can be clicked together in a similar way as described above. A variant of this is shown in Fig 11. A two click elements 10, 11 that fit together are equipped on both sides with a blocking device consisting of the combination blocking pins 14 and blocking recesses 16 wherein the operation is similar to that described in Fig 10. However, when applying the blocking pins 14 in the blocking recesses 16, the base panel 21 of one click element 10 must be able to be bent to move the blocking pins 14 through the openings of the blocker recesses 16. When the pins 17 are clicked together, the blocking pins 14 will automatically move to their endpoint in the blocking recesses 16.

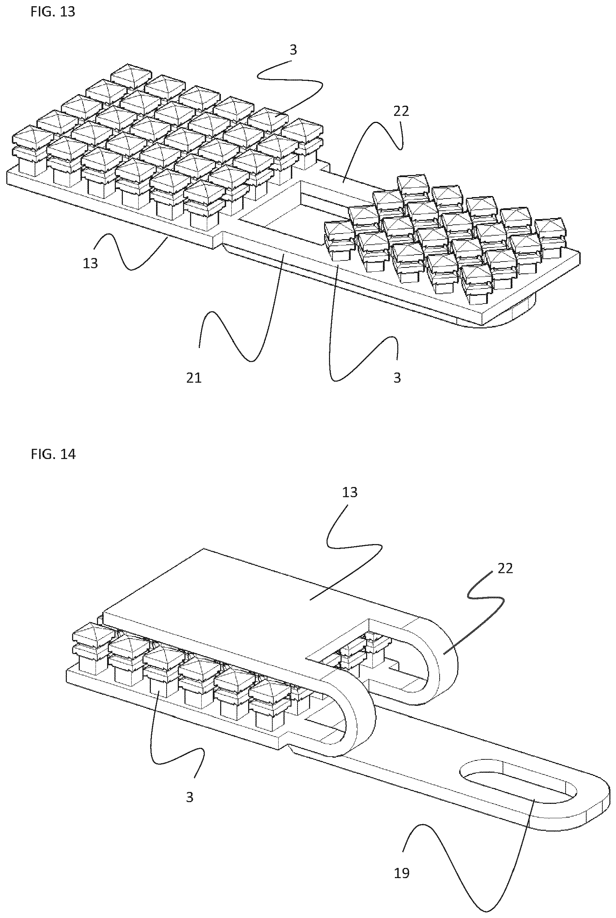

Many applications and variants are possible regarding the clicking together of the two click elements as a fastener. Figs 13 and 14 describe a variant in which the base panels 21 of the different click elements 13 are connected by a flexible bracket 22. When folding the two opposing click elements 13, the opposite pins 1 interlock with the pins 1 of the different click elements 13 positioned at the same center distance from each other, but the pins of one part of the engagement click element 13 45° are rotated in relation to the other part of the engagement element 13. The pins 1 of the two parts of the click element 13 are equipped with two ribs 5 of the barb principle 1. When engaging, the protrusions, which form the ribs 5 of the pins 1, are positioned in the recesses of the opposing pins 1. One part of the click element is equipped with an extension 23 in which an eye 19 is provided so that a suspension device is formed. This is preferably composed of the same material as the base panels 21 of the click element 13.

An additional preferred embodiment, as shown in FIG 14, consists of a click element 6 that is extended with a foil 25. This allows the click element 6 to be attached to a smooth surface such as a tile. The air is pushed from under the foil 25, creating a suction effect and the click element sticking to the wall. Another object equipped with an opposite click panel 7 can be attached to the first click element 6. The advantage of such a version is that the whole side of the click element 6 and foil 25 can be built from 1 material, which greatly simplifies the production.

According to another aspect, pins 17 and protrusions or ribs 5 have the following possible shapes in terms of transverse section, rectangle, square, round, polygon, or other possible geometric shapes. The shape of the pin itself may differ from the protrusions or ribs 5. In some preferred embodiments, it is appropriate and even necessary that the corners of the square or rectangular shapes be rounded in general.

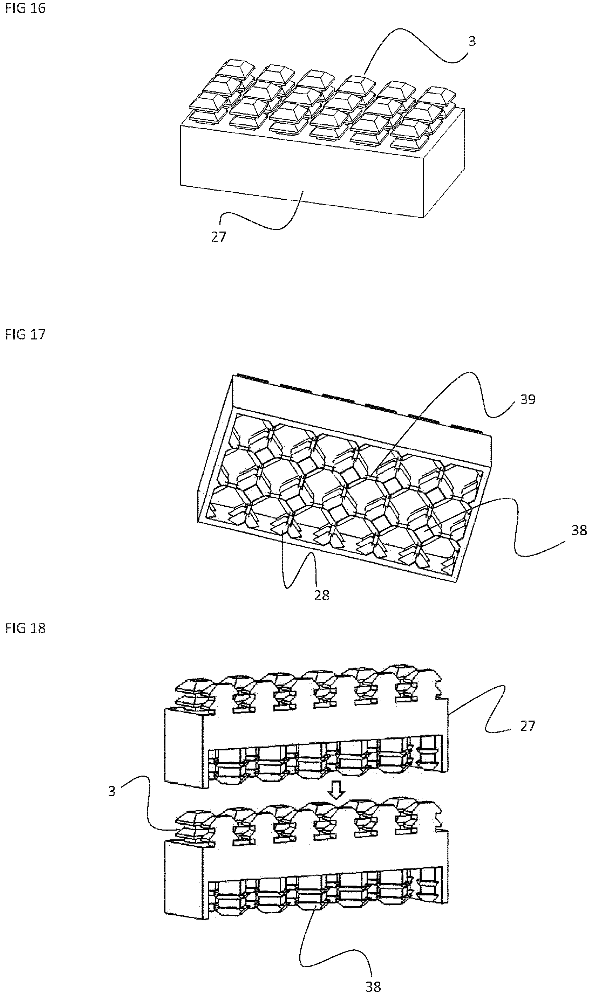

An additional preferred embodiment, as shown in FIG 16, 17, and 18, is a click block 26 with the same function as the well-known LEGO ^{(tm)} block.

The click block 26 has external pins 3 at the top and internal pins 38 at the bottom. In this embodiment, the internal pins 38 are 45° rotated relative to the external pins. The external pins 3 and internal pins 38 are arranged in the x- and y- direction at an equal distance, making the click blocks 26 to be connected compatible both in the longitudinal direction and the transverse direction.

Another embodiment is possible wherein the external pins 3 and their ribs 5 have a round shape, and the internal pins 38 and related ribs 5 have a square shape or vice versa.

Combinations are also possible where, for example, the pins 17 themselves are square in shape, and the shape of ribs 5 is round.

The shapes of the pins 17 and ribs 5 can be used randomly together depending on the desired effect.

Fig 18 shows a transverse section of an arrangement of two superimposed click blocks 26. If these two click blocks 26 are pressed together, the external pins 3 at the top fill the space between the internal pins 38 from the bottom. The walls 27 of the click block 26 are equipped with wall pins 28 which provide an additional clamping of the external pins 3.

To ensure that the click blocks 26 cannot move sideways concerning each other when mounted, it is recommended that the dimensions of the external pins 3 and internal pins 38 are defined in such a way that the angular side of at least one pin touches the protrusion of the opposite pin.

If the protrusions have a square shape, the angular side touches the center of the side of the square of the opposite rib 5.

In Fig 16-17-18, click blocks are provided with a set of external pins 3 and a set of internal pins 28.

The outside of the walls can possibly be provided in x-, y- and z- directions with an extra set of external pins 3 and/or internal set of pins 28, with or without additional walls 27.

The pins can be identical in shape and arrangement on both sides but also opposite in shape and/or arrangement.

The protrusions of ribs 5 on the pins can be partially or entirely provided around the pin. Depending on the desired adhesive strength, these can be adjusted in shape and dimensions.

For the operation in general and considering the click blocks 26, it is recommended that the protrusions have a difference in size compared to the pin of 0.2mm, possibly 0.1 or 0.3 mm but preferably no larger than 0.4mm. This is independent of the size of the pins themselves. As an example, if the pin and protrusion are both square in shape and the pin itself has a width of 2mm between the parallel sides, the protrusion preferably has a width of 2.4mm between the parallel sides, possibly 2.2mm or 2.6mm but preferably no more than 2.8mm.

The ratios of the height of the ribs 5, the width of the ribs 5 between the parallel sides, and the number of ribs 5 also determine the strength of the connection between the internal pins 38 and external pins 17. This allows click blocks 26 with different adhesive strengths to be combined with each other.

It is recommended that the edges of the walls 27 of the click block 26 are rounded on the outside, which gives the advantage that they feel much softer in contrast to the current Lego blocks made in hard plastic.

One possibility is that the walls 27 of the click block 26 are pressable in a transverse direction. This creates a spring effect in which the ribs 5 of the external pins 3 can hook behind the internal pins 38 by pressing the wall 27 lightly. When releasing the tension on wall 27, wall 27 wants to return to its original position, whereby jacking the external pins 3 with the internal pins 38 under tension creates a solid connection.

Fig 17 shows a possible embodiment where the internal pins 38 are connected by partitions 39. Connecting at least 2 or more pins can make a closer and more stable connection. The partition can connect both external 3 and internal pins 38. An additional effect is that the walls 27 can retain their straight shape.

By varying the ribs of the pins in size and width, click blocks can be made with varying adhesive strength that can be combined with each other.

Smaller blocks can be provided with pins with triple ribs 4 to connect smaller pieces with e.g. only 1, 2, 3, or 4 pins. As a result, the adhesion will be more excellent.

The wall pins 28 that are located on one side that connects to a connecting click block can take the form of a full pin in combination with the other wall pin 28 of the connected click block 26.

Advantages compared to the well-known hard Lego bricks are the following:
The hard Lego bricks come off immediately when folding a flexible base, such as a mat provided with pins 17. This is not the case with the click blocks 26 as described in the present invention.

Since the structure and tolerances of the click blocks are less critical, it is possible to use plastics such as certain bioplastics unsuitable for hard click blocks such as the well-known Lego blocks.

By using click blocks that all have the exact definition of internal pins, but where the external pins can vary in the number of ribs and/or dimensions, click blocks with different adhesive strengths can be combined with each other.

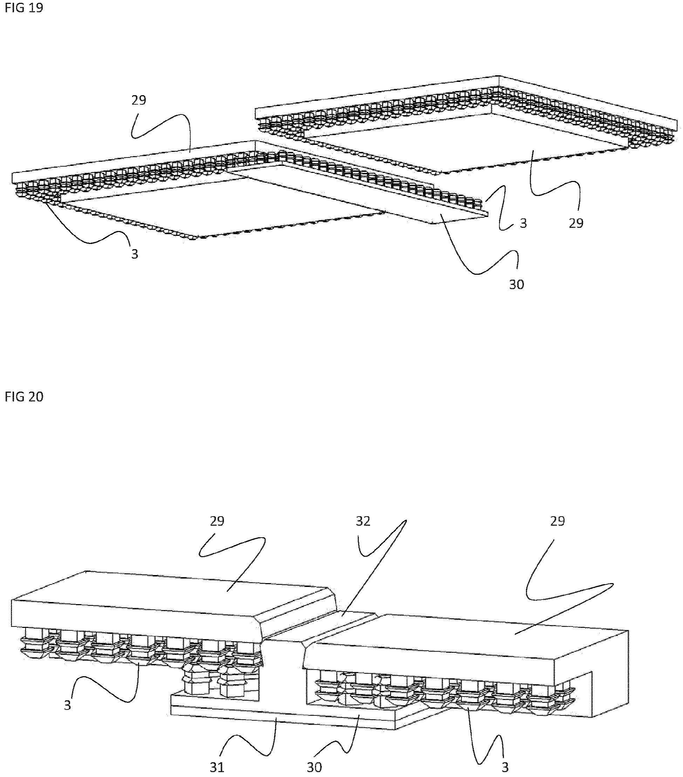

As shown in FIG 19 and 20, an additional preferred embodiment consists of tiles 29, partly equipped with external pins with double ribs 3, connected using a connection strip 30. In the proposed version, the connection strip 30 is also equipped with external pins with double ribs 3.

The goal here is that half of the connection strip 30 is provided for a first tile 29 and that a second tile 29 to be connected is clicked on the other part of the connection strip 30. This creates a connection in which the tiles 29 are perfectly aligned so that the tiles can still be easily disassembled and reassembled after assembly.

Fig 20 shows a preferred embodiment wherein the connection strip 30 is provided with an additional sealing strip 32 and adhesive strip 31. The adhesive strip 31 makes it possible to attach the connection strip 30 to a surface such as a floor, wall, or ceiling. The sealing strip 32 divides the connection strip into two parts where the 2 parts preferably have an equal number of pins 3. When clicking tile 29 into connection strip 30, the side of the tile 29 pushes against the adhesive strip 32. Preferably, the sealing strip 32 is composed of flexible material and equipped with an extra recess in which fits the side of the tile 29. This allows a waterproofing connection between tile 29 and adhesive strip 32.

The pins 3 are preferably only provided along the sides partially or entirely along the entire length of the side of tile 29 but can also be provided on tile 29 in other places or even over the entire bottom.

The connection strip 30 can be made of soft or hard material in combination with the tiles 29, which can also be built from hard or soft material. This depends on the desired application.

The pins 3 provided on tile 29 can be of the same material in one piece but can also be different elements that may be composed of a different material.

The connection strip 30 can also have the shape of a corner element to connect the tiles 29 on the corner sides but also in a cross shape to connect, for example, four tiles 29, but it can also be a grid or frame in which fit the tiles 29.

Because the tiles 29 can be easily replaced after assembly, they can be equipped with illuminating elements, pressure gauges, and other elements that may or may not run on batteries.

An additional possibility is that connection strip 30 will be equipped with additional channels in which, for example, electrical lines can be accommodated.

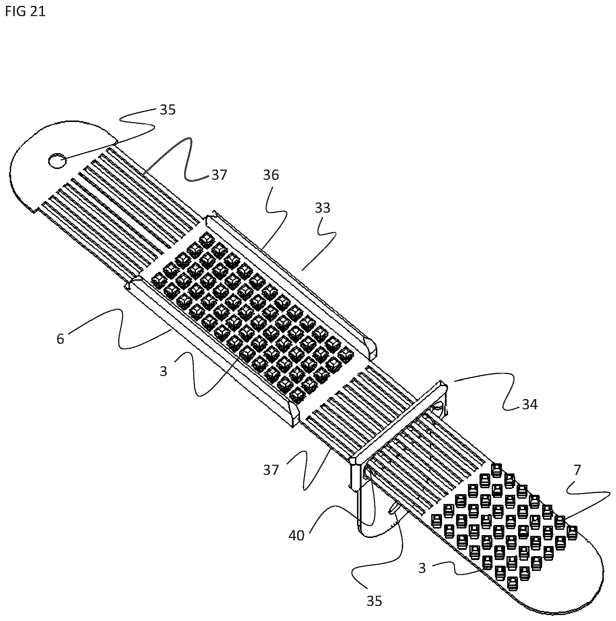

Fig 21 shows a closure strip 33 for closing, for example, an orthosis.

The closure strip 33 comprises three parts: click element one 6, click element two 7, and flexible connections 37. The closure strip 33 is preferably supplemented with a bracket 34 to connect the closure strip 33 with an element such as an orthosis.

For the application of closure strip 33 as a closure element for an orthosis, closure strip 33 is preferably provided with an opening 35 with which the closure strip can be connected to one side of the orthosis. On the other side of the orthosis, bracket 34 can be attached. When closing the orthosis using closure strip 33, click element two 7 is inserted through slot 40 of bracket 34, and slot 40 is located at the level of the flexible connection 37 between click element one 6 and click element two 7.

To block closure strip 33, click element two 7 is clicked on the first click element. Pins 3 of click element two 7 are rotated 45° compared to the pins 3 of click element one 6.

If the longitudinal direction of the closure strip 33 is the x-direction and the transverse direction is the y-direction, then the pins 3 of click element two 7 and click element one 6 are preferably equidistant both in the x-direction and y-direction.

However, it is possible that the pins 3 on the click elements 6,7 itself have a different distance in the x-direction and y-direction. For example, by setting pins 3 in the x-direction further apart than the y-direction, the effect can be obtained whereby pins 3 of click element 6 and click element 7 can easily be clicked in and out of each other but when they are put under tension in the x-direction a solid connection is realised.

To ensure that click element two 7 is placed correctly on click element one 6, click element one 6 can be provided with a vertical wall 36.

## Claims

1. Building block (26), comprising a substantially hollow body with a closed upper face, one or more closed walls (27) projecting downward from said upper face, and an open lower face, wherein the closed upper face comprises a plurality of pins (1, 2, 3, 4) on the top side in a regular grid pattern, and wherein the bottom side of the upper face comprises a plurality of pins (38) in a regular grid pattern,
and wherein the walls comprise wall pins (28) on the inwards facing side, said wall pins extending from the bottom side of the upper face along the walls, wherein said wall pins are part of the regular grid pattern defined by the plurality of pins on the bottom side of the upper face, preferably wherein the wall pins are shaped as a section of a pin on the bottom side, said section defined by a plane bisecting the pins parallel to the longitudinal axis of the pins, and more preferably said plane comprising the longitudinal axis of the pins;
**characterized in that** the pins and the wall pins comprise at least one anchoring segment (5) along the longitudinal axis with a radius greater than a radius of an underlying segment (15) of the pins and wall pins respectively, and optionally a greater radius than a radius of an overlying segment (15) of the pins;
wherein the pins are flexible, and preferably made up of a flexible material or by reducing the thickness of a rigid material to provide some flexibility, and wherein the anchoring segments of the wall pins are flexible, and preferably made up of a flexible material or by reducing the thickness of a rigid material to provide some flexibility;
wherein the pins on the top side, and the pins and the wall pins on the bottom side are configured such that when the top side of the building block is pushed against the open lower face of an other of said building blocks, the pins of the top side of the building block and the pins of the bottom side and the wall pins of the other of said building blocks flex to allow at least one of the anchoring segments of the pins of the top side of the building block to move past the anchoring segments of at least three of the pins of the bottom side and of the wall pins of the other of said building blocks, to place the building block and the other of said building blocks in an attached state.

2. Building block according to the preceding claim 1, wherein at rest, the pins on the top side are distanced from each other such that the anchoring segments of the pins of the top side at rest have a distance between them which defines a free space between the anchoring segments in the plane parallel to the upper face where a transverse cross-section of the anchoring segments of the pins and wall pins on the bottom side does not fit in, and wherein the underlying segments of the pins of the top side at rest define a space between the underlying segments in the plane parallel to the upper face where a transverse cross-section of the anchoring segments of the pins and the wall pins on the bottom side does fit in, in a way that when the top face of said block and the bottom face of an other of said blocks are pushed together facing each other with the anchoring segments of the pins on the top side of said block past the anchoring segments of the pins on the bottom side and the wall pins of the other of said blocks, the pins and wall pins hold each other clampingly.

3. Building block according to any of the preceding claims 1 to 2, wherein at least one of the anchoring segments of each of the wall pins and at least one of the anchoring segments of each of the pins on the bottom side of the upper face are distanced from the open lower face over a distance higher than the distance over which the at least one anchoring segments of each of the pins on the top side of the upper face are distanced from said top side.

4. Building block according to any of the preceding claims 1 to 3, wherein the bottom of the anchoring segment of the pins on the top side of the upper face is distanced from said upper face over a substantially equal distance as the bottom of the anchoring segments of the wall pins and the pins on the bottom side of the upper face are distanced from the open lower face.

5. Building block according to any of the preceding claims 1 to **4,** wherein each of the pins **(3, 4,** 38) and wall pins (28) comprises at least two anchoring segments (5), wherein the bottom of the most distal anchoring segment of the pins on the top side of the upper face is distanced from said upper face over a substantially equal distance as the bottom of the most proximal anchoring segments of the wall pins and the pins on the bottom side of the upper face are distanced from the open lower face.

6. Building block according to the preceding claim 5, wherein the bottom of the most proximal anchoring segment of the pins on the top side of the upper face is distanced from said upper face over a substantially equal distance as the bottom of the most distal anchoring segments of the wall pins and the pins on the bottom side of the upper face are distanced from the open lower face.

7. Building block according to any one of claims 1 to 6, wherein the building block is substantially beam-shaped and comprises four closed walls (27) projecting downward from the upper face, said walls joining in four corner edges, wherein each of said edges is provided with a corner pin comprising at least one anchoring segment (5) being flexible, preferably made up of a flexible material, said corner pin being configured to allow at least one of the anchoring segments of the pins of the top side of the building block to move past the anchoring segments of at least three of the pins of the bottom side and of the wall pins of the other of said building blocks;
preferably wherein the corner pins are shaped as a section of a pin on the bottom side, said section defined by a first plane bisecting the pin parallel to the longitudinal axis of the pins and a second plane bisecting the pin parallel to the longitudinal axis and perpendicular to said first plane, and more preferably said first and second planes comprising the longitudinal axis of the pins.

8. Building block according to any one of claims 1 to 7, wherein the pins on the top side of the upper face are positioned in a first orientation relative to the axes of the grid pattern of the pins on the top side, and the pins on the bottom side and the wall pins are positioned in a second orientation relative to the axes of the grid pattern of the second carrier, wherein the first orientation is rotated approximately 45° in relation to the second orientation.

9. Building block according to any one of claims 1 to 8, wherein the pins have a square transverse cross-section along the longitudinal axis thereof.

10. Building block according to any one of claims 1 to 9, wherein the anchoring segments have a radius of at least 10% greater than the radius of the other segments, preferably at least 20%, preferably at least 25%, at least 30% even further preferably.

11. Building block according to any one of claims 1 to 10, wherein the pins have a maximum diameter of 5.0 **mm,** preferably 4.0 **mm,** preferably 3.0 **mm,** with a further preference of 2.75 mm.

12. Building block according to any one of claims 1 to 11, according to one of the preceding claims, wherein the pins have a minimum diameter of 1.5 mm, preferably 1.75 mm, preferably 2.0 mm, with even further preferably 2.2 mm.

13. Building block according to any one of claims 1 to 12, wherein the pins on the top side are a first group of pins and the pins on the bottom side and the wall pins, and optionally the corner pins, are a second group of pins, wherein the pins and wall pins have a square transverse cross-section along the longitudinal axis, and wherein the sides of the square transverse cross-section of the first or second group of pins are either parallel to the axes of the grid pattern for said group of pins, and the sides of the square transverse cross-section of respectively the second or first group of pins form an angle of approximately 45° to the axes of the grid pattern for said group of pins.

14. Building block according to any one of claims 1 to 13, wherein the interaxial distances between neighboring pins of the top side and the interaxial distances between neighboring pins and/or wall pins of the bottom side are substantially equal.

15. Building block, according to one of the preceding claims 1 to 14, wherein the anchoring elements comprise at least one, preferably 2, 3, 4 or more, barb-shaped elements at the bottom of said anchoring elements, preferably at the corners.

## Patentansprüche

1. Baustein (26), umfassend einen im Wesentlichen hohlen Körper mit einer geschlossenen Oberseite, einer oder mehreren von der genannten Oberseite nach unten vorspringenden geschlossenen Wänden (27) und einer offenen Unterseite, wobei die geschlossene Oberseite eine Mehrzahl von Zapfen (1, 2, 3, 4) auf der Oberseite in einem regelmäßigen Rastermuster aufweist und wobei die Unterseite der Oberseite eine Mehrzahl von Zapfen (38) in einem regelmäßigen Rastermuster aufweist, und wobei die Wände Wandzapfen (28) auf der einwärts gerichteten Seite aufweisen, welche Wandzapfen sich von der Unterseite der Oberseite entlang der Wände erstrecken, wobei die genannten Wandzapfen Teil des durch die Mehrzahl von Zapfen auf der Unterseite der Oberseite definierten regelmäßigen Rastermusters sind, vorzugsweise wobei die Wandzapfen als Abschnitt eines Zapfens an der Unterseite ausgebildet sind, welcher Abschnitt durch eine die Zapfen parallel zu ihrer Längsachse halbierende Ebene definiert ist und wobei vorzugsweise die genannte Ebene die Längsachse der Zapfen umfasst; **dadurch gekennzeichnet, dass** die Zapfen und die Wandzapfen mindestens ein Verankerungssegment (5) entlang der Längsachse mit einem Radius aufweisen, der größer ist als ein Radius eines darunterliegenden Segments (15) der Zapfen beziehungsweise Wandzapfen, und optional größer ist als ein Radius eines darüberliegenden Segments (15) der Zapfen; wobei die Zapfen flexibel sind und vorzugsweise aus einem flexiblen Material bestehen oder durch Verringerung der Wandstärke eines starren Materials eine gewisse Flexibilität aufweisen, und wobei die Verankerungssegmente der Wandzapfen flexibel sind und vorzugsweise aus einem flexiblen Material bestehen oder durch Verringerung der Wandstärke eines starren Materials eine gewisse Flexibilität aufweisen; wobei die Zapfen auf der Oberseite sowie die Zapfen und die Wandzapfen auf der Unterseite so ausgebildet sind, dass, wenn die Oberseite des Bausteins gegen die offene Unterseite eines anderen der genannten Bausteine gedrückt wird, die Zapfen der Oberseite des Bausteins und die Zapfen der Unterseite und die Wandzapfen des anderen der genannten Bausteine sich elastisch verformen, um zu ermöglichen, dass sich mindestens eines der Verankerungssegmente der Zapfen der Oberseite des Bausteins an den Verankerungssegmenten von mindestens drei der Zapfen der Unterseite und der Wandzapfen des anderen der genannten Bausteine vorbeibewegt, um den Baustein und den anderen der genannten Bausteine in einen verbundenen Zustand zu versetzen.

2. Baustein nach dem vorangehenden Anspruch 1, wobei im Ruhezustand die Zapfen auf der Oberseite derart voneinander beabstandet sind, dass die Verankerungssegmente der Zapfen der Oberseite im Ruhezustand einen Abstand zueinander aufweisen, der einen Freiraum zwischen den Verankerungssegmenten in einer zur Oberseite parallelen Ebene definiert, in den ein Querschnitt der Verankerungssegmente der Zapfen und Wandzapfen an der Unterseite nicht hineinpasst, und wobei die darunterliegenden Segmente der Zapfen der Oberseite im Ruhezustand einen Raum zwischen den darunterliegenden Segmenten in einer zur Oberseite parallelen Ebene definieren, in den ein Querschnitt der Verankerungssegmente der Zapfen und der Wandzapfen an der Unterseite hineinpasst, derart, dass, wenn die Oberseite des genannten Bausteins und die Unterseite eines anderen der genannten Bausteine einander zugewandt zusammengedrückt werden, wobei sich die Verankerungssegmente der Zapfen auf der Oberseite des genannten Bausteins an den Verankerungssegmenten der Zapfen auf der Unterseite und der Wandzapfen des anderen der genannten Bausteine vorbeibewegen, die Zapfen und Wandzapfen einander klemmend halten.

3. Baustein nach einem der vorangehenden Ansprüche 1 bis 2, wobei mindestens eines der Verankerungssegmente jedes der Wandzapfen und mindestens eines der Verankerungssegmente jedes der Zapfen auf der Unterseite der Oberseite über eine Entfernung von der offenen Unterseite beabstandet ist, die größer ist als die Entfernung, über welche das mindestens eine Verankerungssegment jedes der Zapfen auf der Oberseite der Oberseite von der genannten Oberseite beabstandet ist.

4. Baustein nach einem der vorangehenden Ansprüche 1 bis 3, wobei der Boden des Verankerungssegments der Zapfen auf der Oberseite der Oberseite über eine im Wesentlichen gleiche Entfernung von der genannten Oberseite beabstandet ist, wie der Boden der Verankerungssegmente der Wandzapfen und der Zapfen auf der Unterseite der Oberseite von der offenen Unterseite beabstandet ist.

5. Baustein nach einem der vorangehenden Ansprüche 1 bis 4, wobei jeder der Zapfen (3, 4, 38) und Wandzapfen (28) mindestens zwei Verankerungssegmente (5) umfasst, wobei der Boden des am weitesten von der Oberseite entfernten Verankerungssegments der Zapfen auf der Oberseite der Oberseite über eine im Wesentlichen gleiche Entfernung von der genannten Oberseite beabstandet ist, wie der Boden der der offenen Unterseite nächstgelegenen Verankerungssegmente der Wandzapfen und der Zapfen auf der Unterseite der Oberseite von der offenen Unterseite beabstandet ist.

6. Baustein nach dem vorangehenden Anspruch 5, wobei der Boden des der Oberseite nächstgelegenen Verankerungssegments der Zapfen auf der Oberseite der Oberseite über eine im Wesentlichen gleiche Entfernung von der genannten Oberseite beabstandet ist, wie der Boden der am weitesten von der offenen Unterseite entfernten Verankerungssegmente der Wandzapfen und der Zapfen auf der Unterseite der Oberseite von der offenen Unterseite beabstandet ist.

7. Baustein nach einem der Ansprüche 1 bis 6, wobei der Baustein im Wesentlichen balkenförmig ist und vier geschlossene Wände (27) umfasst, die von der Oberseite nach unten vorspringen, wobei die genannten Wände in vier Eckkanten zusammenlaufen, wobei jede der genannten Kanten mit einem Eckzapfen versehen ist, der mindestens ein flexibles Verankerungssegment (5) umfasst, vorzugsweise aus einem flexiblen Material besteht, wobei der Eckzapfen derart ausgebildet ist, dass mindestens eines der Verankerungssegmente der Zapfen der Oberseite des Bausteins an den Verankerungssegmenten von mindestens drei der Zapfen der Unterseite und der Wandzapfen des anderen der genannten Bausteine vorbeibewegbar ist; vorzugsweise wobei die Eckzapfen als Abschnitt eines Zapfens an der Unterseite ausgebildet sind, welcher Abschnitt durch eine erste Ebene definiert ist, die den Zapfen parallel zu der Längsachse der Zapfen halbiert, und durch eine zweite Ebene, die den Zapfen parallel zu der Längsachse und senkrecht zu der genannten ersten Ebene halbiert, und wobei vorzugsweise die genannte erste und zweite Ebene die Längsachse der Zapfen umfassen.

8. Baustein nach einem der Ansprüche 1 bis 7, wobei die Zapfen auf der Oberseite der Oberseite in einer ersten Orientierung relativ zu den Achsen des Rastermusters der Zapfen auf der Oberseite angeordnet sind und die Zapfen auf der Unterseite und die Wandzapfen in einer zweiten Orientierung relativ zu den Achsen des Rastermusters des zweiten Trägers angeordnet sind, wobei die erste Orientierung gegenüber der zweiten Orientierung um etwa 45° gedreht ist.

9. Baustein nach einem der Ansprüche 1 bis 8, wobei die Zapfen einen quadratischen Querschnitt entlang ihrer Längsachse aufweisen.

10. Baustein nach einem der Ansprüche 1 bis 9, wobei die Verankerungssegmente einen Radius aufweisen, der mindestens 10% größer ist als der Radius der anderen Segmente, vorzugsweise mindestens 20%, vorzugsweise mindestens 25%, noch weiter vorzugsweise mindestens 30%.

11. Baustein nach einem der Ansprüche 1 bis 10, wobei die Zapfen einen maximalen Durchmesser von 5,0 mm, vorzugsweise 4,0 mm, vorzugsweise 3,0 mm, mit weiterer Präferenz 2,75 mm aufweisen.

12. Baustein nach einem der Ansprüche 1 bis 11, wobei die Zapfen einen minimalen Durchmesser von 1,5 mm, vorzugsweise 1,75 mm, vorzugsweise 2,0 mm, mit noch weiterer Präferenz 2,2 mm aufweisen.

13. Baustein nach einem der Ansprüche 1 bis 12, wobei die Zapfen auf der Oberseite eine erste Gruppe von Zapfen bilden und die Zapfen auf der Unterseite und die Wandzapfen und optional die Eckzapfen eine zweite Gruppe von Zapfen bilden, wobei die Zapfen und Wandzapfen einen quadratischen Querschnitt entlang der Längsachse aufweisen und wobei die Seiten des quadratischen Querschnitts der ersten oder zweiten Gruppe von Zapfen entweder parallel zu den Achsen des Rastermusters für die genannte Gruppe von Zapfen verlaufen und die Seiten des quadratischen Querschnitts der jeweils zweiten oder ersten Gruppe von Zapfen einen Winkel von etwa 45° zu den Achsen des Rastermusters für die genannte Gruppe von Zapfen bilden.

14. Baustein nach einem der Ansprüche 1 bis 13, wobei die Achsabstände zwischen benachbarten Zapfen der Oberseite und die Achsabstände zwischen benachbarten Zapfen und/oder Wandzapfen der Unterseite im Wesentlichen gleich sind.

15. Baustein nach einem der Ansprüche 1 bis 14, wobei die Verankerungselemente am unteren Ende der genannten Verankerungselemente mindestens ein, vorzugsweise 2, 3, 4 oder mehr, hakenförmiges Element aufweisen, vorzugsweise an den Ecken.

## Revendications

1. Bloc de construction (26), comprenant un corps sensiblement creux avec une face supérieure fermée, une ou plusieurs parois fermées (27) faisant saillie vers le bas à partir de ladite face supérieure, et une face inférieure ouverte, dans lequel la face supérieure fermée comprend une pluralité de broches (1, 2, 3, 4) sur la face supérieure selon un motif de grille régulier, et dans lequel la face inférieure de la face supérieure comprend une pluralité de broches (38) selon un motif de grille régulier,
et dans lequel les parois comprennent des broches murales (28) sur la face intérieure, lesdites broches murales s'étendant du côté inférieur de la face supérieure le long des parois, lesdites broches murales faisant partie du motif de grille régulier défini par la pluralité de broches sur le côté inférieur de la face supérieure, de préférence dans lequel les broches murales sont formées comme une section d'une broche sur le côté inférieur, ladite section étant définie par un plan bissectant les broches parallèlement à l'axe longitudinal des broches, et plus particulièrement ledit plan comprenant l'axe longitudinal des broches ;
**caractérisé en ce que** les broches et les broches murales comprennent au moins un segment d'ancrage (5) le long de l'axe longitudinal avec un rayon supérieur à un rayon d'un segment sous-jacent (15) des broches et des broches murales respectivement, et éventuellement un rayon supérieur à un rayon d'un segment sus-jacent (15) des broches ;
dans lequel les broches sont flexibles, et de préférence constituées d'un matériau flexible ou obtenues en réduisant l'épaisseur d'un matériau rigide pour offrir une certaine flexibilité, et dans lequel les segments d'ancrage des broches murales sont flexibles, et de préférence constitués d'un matériau flexible ou obtenus en réduisant l'épaisseur d'un matériau rigide pour offrir une certaine flexibilité ;
dans lequel les broches de la face supérieure, ainsi que les broches et les broches murales de la face inférieure, sont configurées de telle sorte que lorsque la face supérieure du bloc de construction est poussée contre la face inférieure ouverte d'un autre bloc de construction, les broches de la face supérieure du bloc de construction et les broches de la face inférieure et les broches murales de l'autre bloc de construction se plient pour permettre à au moins un des segments d'ancrage des broches de la face supérieure du bloc de construction de dépasser les segments d'ancrage d'au moins trois des broches de la face inférieure et des broches murales de l'autre bloc de construction, afin de placer le bloc de construction et l'autre bloc de construction dans un état attaché.

2. Bloc de construction selon la revendication 1 précédente, dans lequel, au repos, les broches de la face supérieure sont espacées de telle sorte que les segments d'ancrage de ces broches, au repos, présentent une distance définissant un espace libre entre eux dans le plan parallèle à la face supérieure, espace dans lequel une section transversale des segments d'ancrage des broches et des broches murales de la face inférieure ne s'insère pas ; et dans lequel les segments sous-jacents des broches de la face supérieure, au repos, définissent un espace entre eux dans le plan parallèle à la face supérieure, espace dans lequel une section transversale des segments d'ancrage des broches et des broches murales de la face inférieure s'insère, de sorte que lorsque la face supérieure dudit bloc et la face inférieure d'un autre bloc sont poussées l'une contre l'autre, face à face, les segments d'ancrage des broches de la face supérieure du bloc dépassant les segments d'ancrage des broches de la face inférieure et les broches murales de l'autre bloc, les broches et les broches murales se maintiennent mutuellement par serrage.

3. Bloc de construction selon l'une quelconque des revendications 1 à 2 précédentes, dans lequel au moins un des segments d'ancrage de chacune des broches murales et au moins un des segments d'ancrage de chacune des broches sur la face inférieure de la face supérieure sont éloignés de la face inférieure ouverte sur une distance supérieure à la distance sur laquelle au moins un segment d'ancrage de chacune des broches sur la face supérieure de la face supérieure est éloigné de ladite face supérieure.

4. Bloc de construction selon l'une quelconque des revendications précédentes 1 à 3, dans lequel le bas du segment d'ancrage des broches sur la face supérieure est éloigné de ladite face supérieure sur une distance sensiblement égale à celle à laquelle le bas des segments d'ancrage des broches murales et des broches sur la face inférieure de la face supérieure est éloigné de la face inférieure ouverte.

5. Bloc de construction selon l'une quelconque des revendications précédentes 1 à 4, dans lequel chacune des broches (3, 4, 38) et des broches murales (28) comprend au moins deux segments d'ancrage (5), dans lequel le bas du segment d'ancrage le plus distal des broches sur la face supérieure est éloigné de ladite face supérieure sur une distance sensiblement égale à celle à laquelle le bas des segments d'ancrage les plus proximaux des broches murales et des broches sur la face inférieure de la face supérieure est éloigné de la face inférieure ouverte.

6. Bloc de construction selon la revendication 5 précédente, dans lequel le bas du segment d'ancrage le plus proximal des broches sur la face supérieure est éloigné de ladite face supérieure sur une distance sensiblement égale à celle à laquelle le bas des segments d'ancrage les plus distaux des broches murales et des broches sur la face inférieure de la face supérieure est éloigné de la face inférieure ouverte.

7. Bloc de construction selon l'une quelconque des revendications 1 à 6, dans lequel le bloc de construction est sensiblement en forme de poutre et comprend quatre parois fermées (27) faisant saillie vers le bas à partir de la face supérieure, lesdites parois se rejoignant en quatre bords d'angle, chacun de ces bords étant muni d'une broche d'angle comprenant au moins un segment d'ancrage (5) flexible, de préférence constitué d'un matériau flexible, ladite broche d'angle étant configurée pour permettre à au moins un des segments d'ancrage des broches de la face supérieure du bloc de construction de passer devant les segments d'ancrage d'au moins trois des broches de la face inférieure et des goupilles de paroi de l'autre bloc de construction ;
de préférence dans laquelle les broches d'angle sont formées comme une section d'une broches sur la face inférieure, ladite section étant définie par un premier plan bissectant la broche parallèlement à l'axe longitudinal des broches et un deuxième plan bissectant la broche parallèlement à l'axe longitudinal et perpendiculaire audit premier plan, et plus particulièrement lesdits premier et deuxième plans comprenant l'axe longitudinal des broches.

8. Bloc de construction selon l'une quelconque des revendications 1 à 7 , dans lequel Les broches situées sur la face supérieure sont positionnées selon une première orientation par rapport aux axes du motif de grille des broches de la face supérieure , et les broches de la face inférieure et les broches de paroi sont positionnées selon une seconde orientation par rapport aux axes du motif de grille du second support, dans lequel la première orientation est tournée d'environ 45° par rapport à la seconde orientation .

9. Bloc de construction selon l'une quelconque des revendications 1 à 8 , dans lequel les broches ont une section transversale carrée le long de leur axe longitudinal .

10. Bloc de construction selon l'une quelconque des revendications 1 à 9 , dans lequel les segments d'ancrage ont un rayon d'au moins 10 % supérieur au rayon des autres segments, de préférence d'au moins 20 %, de préférence d'au moins 25 %, d'au moins 30 %, voire plus de préférence encore.

11. Bloc de construction selon l'une quelconque des revendications 1 à 10 , dans lequel les broches ont un diamètre maximal de 5,0 mm, de préférence de 4,0 mm, de préférence de 3,0 mm, avec une préférence supplémentaire de 2,75 mm.

12. Bloc de construction selon l'une quelconque des revendications 1 à 11 , selon l'une des revendications précédentes, dans lequel les broches ont un diamètre minimum de 1,5 mm, de préférence 1,75 mm, de préférence 2,0 mm, et encore plus de préférence 2,2 mm.

13. Bloc de construction selon l'une quelconque des revendications 1 à 12 , dans lequel les broches de la face supérieure constituent un premier groupe de broches et les broches de la face inférieure et les broches murales, et éventuellement les broches d'angle, constituent un deuxième groupe de broches, dans les broches et les broches murales ont une section transversale carrée le long de l'axe longitudinal, et dans lequel les côtés de la section transversale carrée du premier ou du deuxième groupe de broches sont soit parallèles aux axes du motif de grille dudit groupe de broches , soit les côtés de la section transversale carrée de respectivement le deuxième ou le premier groupe de broches forme un angle d'environ 45° avec les axes du motif de grille dudit groupe de broches .

14. Bloc de construction selon l'une quelconque des revendications 1 à 13 , dans lequel les distances interaxiales entre les broches voisines de la face supérieure et les distances interaxiales entre les broches voisines et/ou les broches murales de la face inférieure sont sensiblement égales.

15. Bloc de construction selon l'une des revendications précédentes 1 à 14, dans lequel les éléments d'ancrage comprennent au moins un, de préférence 2, 3, 4 ou plus, éléments en forme de barbes à la base desdits éléments d'ancrage, de préférence aux coins.
